# EUROPEAN PATENT APPLICATION

(11) **EP 2 876 522 A1**
(43) Date of publication of application: **27.05.2015**
(21) Application number: 14193995.9
(22) Date of filing: 20.11.2014
(51) Int. Cl.: G06F 1/16, G06F 3/0488

(54) **Mobile terminal and display control method**

(30) Priority: 22.11.2013 JP 2013241826
(71) Applicant: FUJITSU LIMITED, Kawasaki-shi, Kanagawa 211-8588 (JP)
(72) Inventor: Itagaki, Hiroki, Kawasaki-shi, Kanagawa 211-8588 (JP); Yamaji, Takayuki, Kawasaki-shi, Kanagawa 211-8588 (JP)
(74) Representative: Lewin, David Nicholas

(57) **Abstract**

A mobile terminal includes: a storage unit configured to store display information for displaying a plurality of display objects in standard positions for a dominant hand; a displaying unit configured to display the plurality of display objects based on the display information; and a display processing unit configured to determine whether the dominant hand is holding the mobile terminal using a sensor, control the display to display the plurality of display objects in the standard positions when the dominant hand is determined as holding the mobile terminal, and control the display to display the plurality of display objects in symmetrical positions determined using a change in the standard positions when the dominant hand is determined as not holding the mobile terminal.

## Description

### FIELD

The embodiments discussed herein are related to a user interface technology.

### BACKGROUND

In Patent Literature 1 and Patent Literature 2, it has been discussed that whether a user operates a mobile device that includes a touch panel with the left hand or right hand is determined and an operation object is displayed in a position in which the user operates the operation object easily. However, identification of the above-described position based on the left hand or right hand by which the operation object is operated has not been described in detail in Japanese Laid-open Patent Publication No. 2012-215945 and International Publication Pamphlet No. WO2009/031214.

### SUMMARY

### TECHNICAL PROBLEM

For example, when the mobile device is held by the opposite hand to the dominant hand, a range with which the thumb is overlapped is different from that of the dominant hand. Thus, when a regular operation is performed by a finger of the opposite hand, the appearance of the screen is different from that of the dominant hand, and how to move the finger also becomes unfamiliar for the user, thereby sometimes confusing the user.

However, it is troublesome to set the layout of a screen display separately in order to improve the usability when the mobile device is held by the opposite hand to the dominant hand.

An object of an embodiment is to provide similar usability for both of a case in which a mobile device is held by the right hand and a case in which the mobile device is held by the left hand.

### SOLUTION TO PROBLEM

According to an aspect of the invention, A mobile terminal includes: a storage unit configured to store display information for displaying a plurality of display objects in standard positions for a dominant hand; a displaying unit configured to display the plurality of display objects based on the display information; and a display processing unit configured to determine whether the dominant hand is holding the mobile terminal using a sensor, control the display to display the plurality of display objects in the standard positions when the dominant hand is determined as holding the mobile terminal, and control the display to display the plurality of display objects in symmetrical positions determined using a change in the standard positions when the dominant hand is determined as not holding the mobile terminal.

### BRIEF DESCRIPTION OF DRAWINGS

FIG. 1 is a diagram illustrating a state in which a mobile terminal device is held by the right hand;
FIG. 2 is a diagram illustrating a state in which the mobile terminal device is held by the left hand;
FIG. 3 is a diagram illustrating an example of a posture angle of the mobile terminal device;
FIG. 4 is a diagram illustrating an arrangement example of icons;
FIG. 5 is a diagram illustrating an arrangement example of the icons;
FIG. 6 is a diagram illustrating an arrangement example of the icons;
FIG. 7 is a diagram illustrating an arrangement example of the icons;
FIG. 8 is a diagram illustrating a hardware configuration example of the mobile terminal device;
FIG. 9 is a diagram illustrating a module configuration example of the mobile terminal device;
FIG. 10 is a diagram illustrating an example of an icon table;
FIG. 11 is a diagram illustrating a flow of main processing;
FIG. 12 is a diagram illustrating a flow of determination processing;
FIG. 13 is a diagram illustrating a flow of first display processing;
FIG. 14 is a diagram illustrating a flow of first detection processing;
FIG. 15 is a diagram illustrating the size of the icon;
FIG. 16 is a diagram illustrating a flow of second display processing;
FIG. 17 is a diagram illustrating an example of the symmetrical position for the icon;
FIG. 18 is a diagram illustrating an example of the symmetrical position for the icon;
FIG. 19 is a diagram illustrating a flow of symmetrical position calculation processing;
FIG. 20 is a diagram illustrating a flow of second detection processing;
FIG. 21 is a diagram illustrating a flow of symmetrical range calculation processing;
FIG. 22 is a diagram illustrating an example of a numeric keypad;
FIG. 23 is a diagram illustrating an arrangement example of the numeric keypad;
FIG. 24 is a diagram illustrating an arrangement example of the numeric keypad;
FIG. 25 is a diagram illustrating an arrangement example of the numeric keypad;
FIG. 26 is a diagram illustrating an arrangement example of the numeric keypad;
FIG. 27 is a diagram illustrating an example of a display object table; and
FIG. 28 is a flow of main processing in a second embodiment.

### DESCRIPTION OF EMBODIMENTS

### [First embodiment]

In the embodiment, whether a mobile terminal device 101 is held by the left hand or right hand is distinguished.

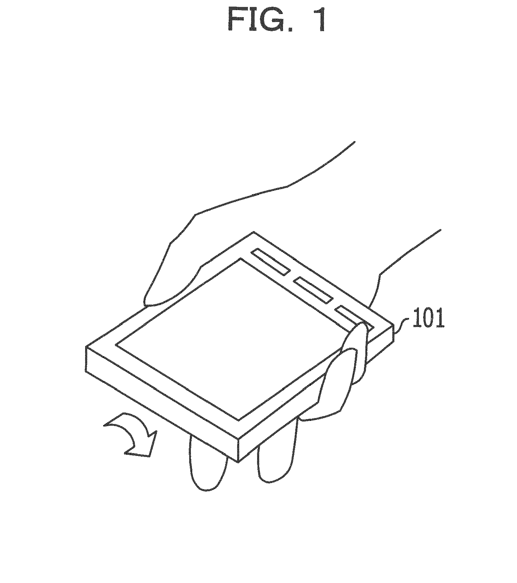

FIG. 1 illustrates a state in which the mobile terminal device 101 is held by the right hand. As illustrated in FIG. 1, in the case in which the mobile terminal device 101 is held by the right hand, the display screen is generally tilted inward. The arrow in FIG. 1 indicates a state in which the mobile terminal device 101 is slightly rotated in the counterclockwise direction from the user's view.

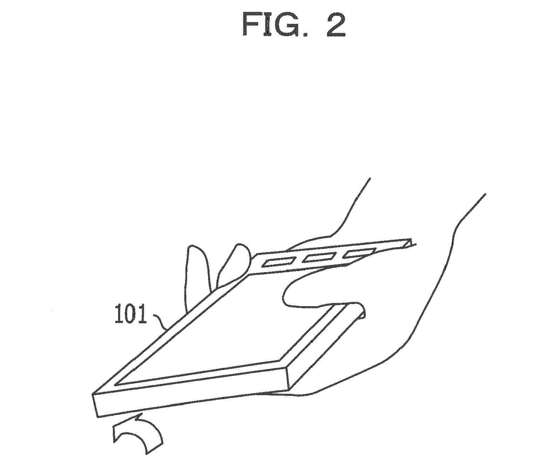

FIG. 2 illustrates a state in which the mobile terminal device 101 is held by the left hand. As illustrated in FIG. 2, in the case in which the mobile terminal device 101 is held by the left hand, the display screen is generally tilted inward. The arrow in FIG. 2 indicates a state in which the mobile terminal device 101 is slightly rotated in the clockwise direction from the user's view.

In the embodiment, whether the user holds the left hand or right hand is determined based on the posture angle of the mobile terminal device 101 by assuming that the mobile terminal device 101 is held as illustrated in FIG. 1 or 2.

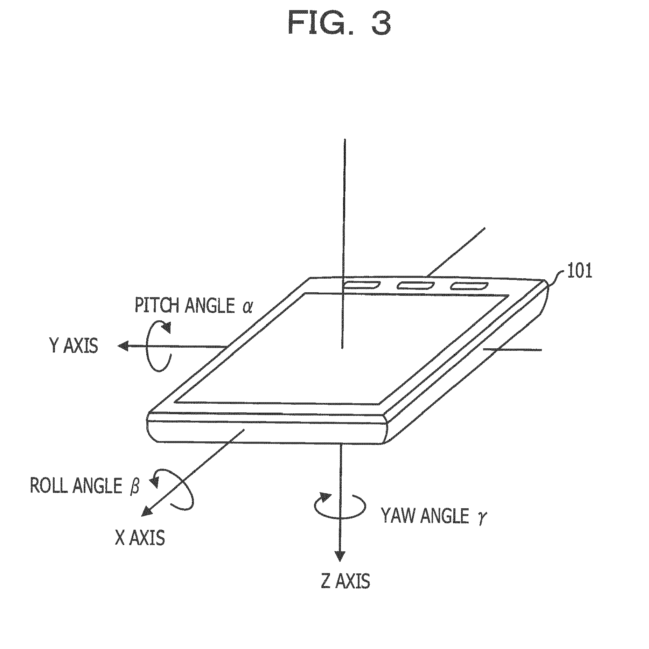

The posture angle of the mobile terminal device 101 is described below. FIG. 3 illustrates an example of the posture angle of the mobile terminal device 101. In FIG. 3, the axis in the longitudinal top direction is set as an X-axis. In addition, the axis in the right direction is set as a Y-axis. The axis from the front side to the back side is set as a Z-axis. As illustrated in FIG. 3, a rotation angle of the X-axis is referred to as a roll angle β. In addition, a rotation angle of the Y-axis is referred to as a pitch angle α. In addition, a rotation angle of the Z-axis is referred to as a yaw angle γ. A state in which the display screen faces in the upper direction horizontally is set as a reference state. In addition, in the reference state, the roll angle β and the pitch angle α are 0 degree.

In the state illustrated in FIG. 1, the roll angle β is approximately - 10 degrees. In the state illustrated in FIG. 2, the roll angle β is approximately +10 degrees.

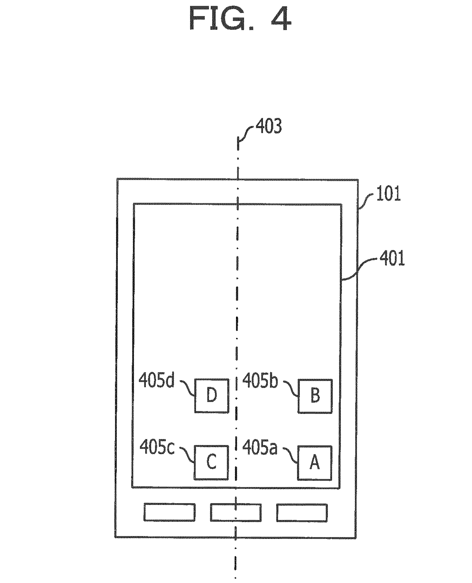

An arrangement example of icons is described below. FIG. 4 is a diagram illustrating an arrangement example of icons, which is suitable when a right-handed user uses the mobile device with the right hand. As illustrated in FIG. 4, a display screen 401 is portrait oriented. A center line 403 is a line that is used to divide the portrait-oriented display screen 401 into left and right equally. In the example, an icon 405a that is represented by "A", an icon 405b that is represented by "B", an icon 405c that is represented by "C", and an icon 405d that is represented by "D" are arranged.

It is assumed that the arrangement of the icons 405 is set by the user. In the example, it is assumed that the user often touches the icon 405 with the thumb of a hand that holds the mobile terminal device 101.

The icon 405a is used to start up a program called "AAA". The icon 405b is used to start up a program called "BBB". The icon 405c is used to start up a program called "CCC". The icon 405d is used to start up a program called "DDD".

In the example, the right-handed user uses the program "AAA" and the program "BBB" frequently, so that it is assumed that the icon 405a and the icon 405b are arranged in the vicinity of the lower right corner of the display screen 401. When the icons are arranged as described above, the program "AAA" and the program "BBB" are started up easily.

It is assumed that the user does not use the program "CCC" and the program "DDD" frequently, and the icon 405c and the icon 405d are arranged on the left side of the center line 403. When the icons are arranged as described above, the program "CCC" and the program "DDD" are not started up easily, but the usage frequency of the programs is low, so that the usability is not reduced.

Thus, when the mobile terminal device 101 is held by the right hand that is the dominant hand, the arrangement that is described above is desired. However, when the mobile terminal device 101 is held by the left hand that is opposite to the dominant hand, the arrangement that is described above reduces for the usability.

In the embodiment, in order to improve the usability when the mobile device is held by the opposite hand to the dominant hand, the arrangement of the icons 405 is changed.

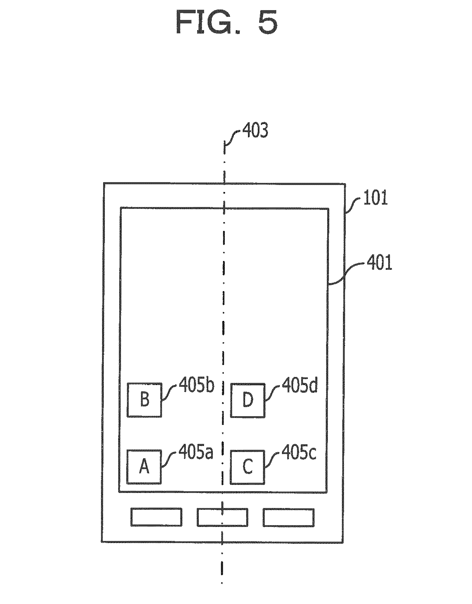

FIG. 5 illustrates an arrangement example of the icons, which is suitable when the right-handed user uses the mobile device with the left hand. In FIG. 5, the positions of the icon 405a that is represented by "A", the icon 405b that is represented by "B", the icon 405c that is represented by "C", and the icon 405d that is represented by "D" are changed. For example, the icons are changed to the symmetrical positions for the positions illustrated in FIG. 4 using the center line 403 as a symmetry axis. As a result, the icon 405a and the icon 405b are arranged in the vicinity of the lower left corner of the display screen 401. In addition, the icon 405c and the icon 405d are arranged on the right side of the center line 403.

Therefore, the program "AAA" and the program "BBB" that are frequently used are easily touched by the thumb of the left hand. The program "CCC" and the program "DDD" are not easily touched by the thumb of the left hand, but the usage frequency of the programs is low, so that the usability does is not reduced.

Thus, when the mobile device is held by the opposite hand to the dominant hand, the positional relationship between the icons and the hand is similar to that of the dominant hand. That is, an icon that is arranged at a position that is easily touched by the right hand is moved to a position that is also easily touched by the left hand. An icon that is arranged at a position that is not easily touched by the right hand is moved to a position that is also not easily touched by the left hand.

In addition, there is also an aspect in which the icon 405c and the icon 405d that are arranged at positions that are seldom covered by the thumb of the right hand when the mobile device is held by the right hand are moved to positions that are seldom covered by the thumb of the left hand when the mobile device is held by the left hand.

In the above-described example, the case is described in which the display screen 401 is portrait oriented, but even in a case in which the display screen 401 is landscape oriented, arrangement of the icons is changed depending on the hand that holds the mobile device.

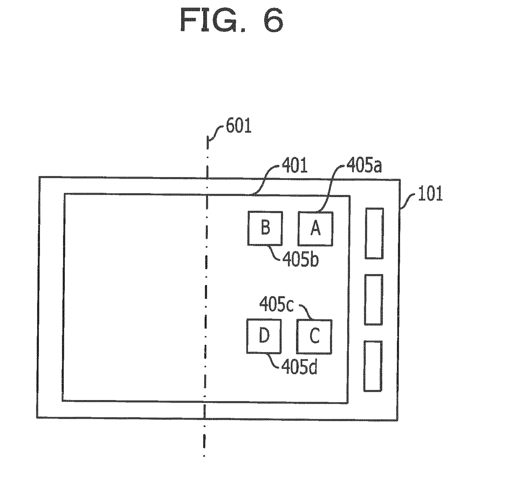

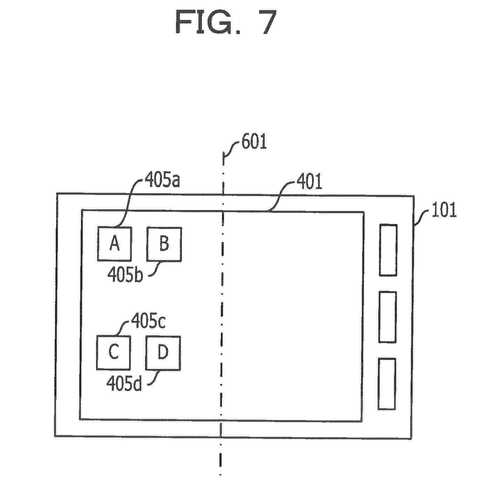

A case is described below in which the display screen 401 is landscape oriented using FIGs. 6 and 7. FIG. 6 illustrates an arrangement example of the icons, which is suitable when the right-handed user uses the mobile device by the right hand. A center line 601 is a line that is used to divide the landscape oriented display screen 401 into left and right equally.

The icon 405a that is represented by "A" and the icon 405c that is represented by "C" are arranged in the rightmost column, and the icon 405b that is represented by "B" and the icon 405d that is represented by "D" are arranged in the second rightmost column. The icons 405 are arranged on the right side as described above are easily touched by the thumb of the right hand.

FIG. 7 illustrates an arrangement example of the icons, which is suitable when the right-handed user uses the mobile device by the left hand. In FIG. 7, the positions of the icon 405a that is represented by "A", the icon 405b that is represented by "B", the icon 405c that is represented by "C", and the icon 405d that is represented by "D" are changed. For example, the icons are moved to the symmetrical positions for the positions illustrated in FIG. 6 using the center line 601 as a symmetry axis. As a result, the icon 405a that is represented by "A" and the icon 405c that is represented by "C" are arranged in the leftmost coiumn, and the icon 405b that is represented by "B" and the icon 405d that is represented by "D" are arranged in the second leftmost column. The icons 405 that are arranged on the left side as described above are easily touched by the thumb of the left hand.

As described above, in the embodiment, whether the mobile terminal device 101 is held by the right hand or left hand is determined, and the arrangement of the icons is changed based on the determination result. The outline of the embodiment is as described above.

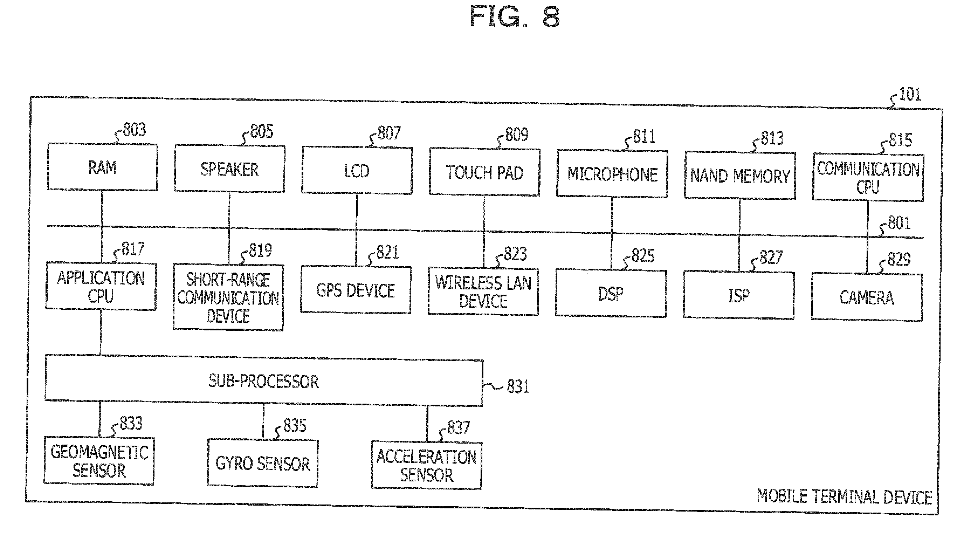

A hardware configuration of the mobile terminal device 101 is described below. FIG. 8 illustrates a hardware configuration example of the mobile terminal device 101. The mobile terminal device 101 includes a bus 801, a random access memory (RAM) 803, a speaker 805, a liquid crystal display (LCD) 807, a touch pad 809, a microphone 811, a NAND memory 813, a communication central processing unit (CPU) 815, an application CPU 817, a short-range communication device 819, a global positioning system (GPS) device 821, a wireless local area network (LAN) device 823, a digital signal processor (DSP) 825, an image signal processor (ISP) 827, a camera 829, a sub-processor 831, a geomagnetic sensor 833, a gyro sensor 835, and an acceleration sensor 837.

From among the configuration elements, the RAM 803, the speaker 805, the LCD 807, the touch pad 809, the microphone 811, the NAND memory 813, the communication CPU 815, the application CPU 817, the short-range communication device 819, the GPS device 821, the wireless LAN device 823, the DSP 825, the ISP 827, and the camera 829 are connected to each other through the bus 801.

The RAM 803 stores, for example, a program and data. The speaker 805 outputs audio.

The touch pad 809 is, for example, a panel-like sensor that is arranged on a display screen of the LCD 807, and accepts an instruction through a touch operation. The LCD 807 displays, for example, various screens through applications. For example, the LCD 807 and the touch pad 809 are integrated so as to be used as a touch panel. Through a touch operation to the touch pad 809, a touch event occurs.

To the microphone 811, audio is input. The NAND memory 813 is a flash memory of a non-volatile storage element. The NAND memory 813 stores, for example, a program and data. The communication CPU 815 executes calculation processing that is related to communication processing. The application CPU 817 is, for example, a calculation device that executes an application program. The short-range communication device 819 is a device that controls short-range communication. The GPS device 821 is a device that measures the position of the mobile terminal device. The wireless LAN device 823 is a device that controls communication of a wireless LAN. The DSP 825 is a processor that executes digital signal processing. The ISP 827 is a processor that executes image processing. The camera 829 is a device that captures an image.

In addition, the application CPU 817 is connected to the sub-processor 831. The sub-processor 831 is connected to the geomagnetic sensor 833, the gyro sensor 835, and the acceleration sensor 837. The sub-processor 831 controls the geomagnetic sensor 833, the gyro sensor 835, and the acceleration sensor 837. The geomagnetic sensor 833 is a device that detects the orientation of geomagnetism and calculates the azimuth direction. The gyro sensor 835 is a device that detects a posture angular velocity. The acceleration sensor 837 is a device that measures acceleration. The geomagnetic sensor 833 and the gyro sensor 835 measure the above-described posture angle as well.

In the example, the application CPU 817 obtains the measurement results of the geomagnetic sensor 833, the gyro sensor 835, and the acceleration sensor 837 through the sub-processor 831, but the application CPU 817 may obtain the measurement results of the geomagnetic sensor 833, the gyro sensor 835, and the acceleration sensor 837 directly.

The mobile terminal device 101 may be, for example, a game console, a controller, an electronic clock, an electronic dictionary, or the like, in addition to a mobile phone terminal device (including a feature phone and a smartphone). The hardware configuration of the mobile terminal device 101 is as described above.

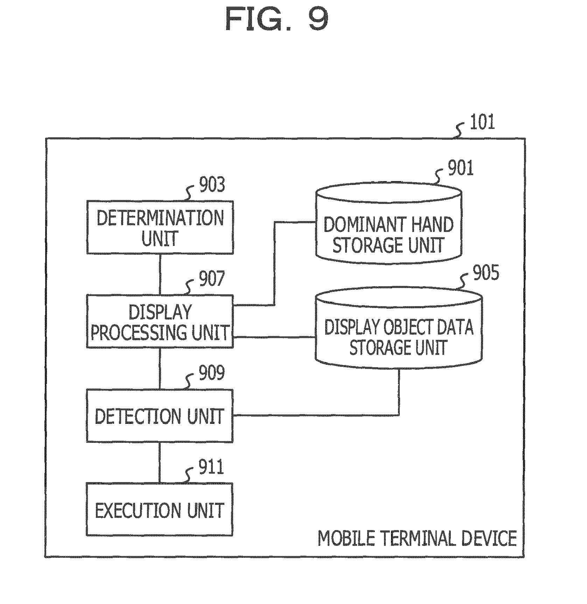

A module configuration of the mobile terminal device 101 is described below. FIG. 9 illustrates a module configuration example of the mobile terminal device 101. The mobile terminal device 101 includes a dominant hand storage unit 901, a determination unit 903, a display object data storage unit 905, a display processing unit 907, a detection unit 909, and an execution unit 911.

The dominant hand storage unit 901, the determination unit 903, the display object data storage unit 905, the display processing unit 907, the detection unit 909, and the execution unit 911 are obtained, for example, by the hardware resources illustrated in FIG. 8. In addition, a part or all of pieces of processing of the modules of the determination unit 903, the display processing unit 907, the detection unit 909, and the execution unit 911 may be achieved by sequentially executing programs that have been loaded into the RAM 803 by the application CPU 817 or the sub-processor 831.

The dominant hand storage unit 901 stores data that is used to identify the dominant hand of the user. For example, the data that is used to identify the dominant hand of the user is registered to the dominant hand storage unit 901. The determination unit 903 determines whether the hand that holds the mobile terminal device 101 is the right hand or the left hand. The display object data storage unit 905 stores data that is related to a display object. In the example, the display object data storage unit 905 stores an icon table.

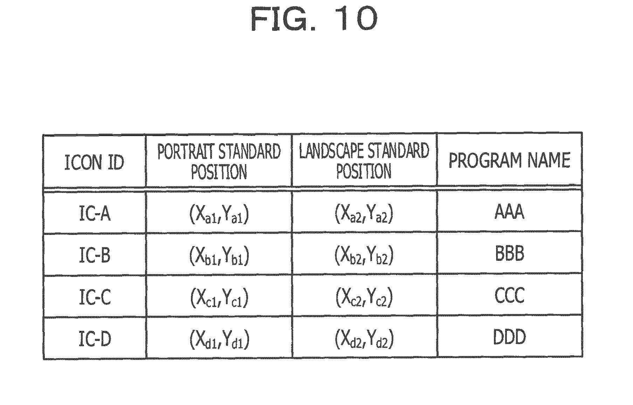

FIG. 10 illustrates an example of the icon table. Each icon includes a record. The record includes a field that is used to set an icon ID, a field that is used to set a portrait standard position, a field that is used to set a landscape standard position, and a field that is used to set a program name.

The icon ID is an identifier that is used to identify an icon. The portrait standard position is data that is used to identify the display position of the icon in the display screen 401 when it is assumed that the display screen 401 is portrait oriented and the mobile terminal device 101 is held by the dominant hand. In the example, the portrait standard position indicates coordinates at the upper left corner of the icon when the X-axis is set in the right direction, and the Y-axis is set in the downward direction using the upper left corner of the portrait oriented display screen 401 as an origin point. The landscape standard position is data that is used to identify the display position of the icon in the display screen 401 when it is assumed that the display screen 401 is landscape oriented, and the mobile terminal device 101 is held by the dominant hand. In the example, the landscape standard position indicates coordinates of the upper left corner of the icon when the X-axis is set in the right direction, and the Y-axis is set in the downward direction using the upper left corner of the landscape oriented display screen 401 as an origin point. The program name is a name of a program that is stared up by selection of the icon.

The first record of the example indicates that an icon that is identified by an icon ID "IC-A" is displayed so that the upper left corner of the icon is matched with coordinates (Xₐ₁,Yₐ₁) when the display screen 401 is portrait oriented. In addition, the first record indicates that the icon is displayed so that the upper left corner of the icon is matched with coordinates (Xₐ₂,Yₐ₂) when the display screen 401 is landscape oriented. In addition, the first record indicates that the program "AAA" is started up when the icon is selected.

The second record of the example indicates that an icon that is identified by an icon ID "IC-B" is displayed so that the upper left corner of the icon is matched with coordinates (X_{b1},Y_{b1}) when the display screen 401 is portrait oriented. In addition, the second record indicates that the icon is displayed so that the upper left corner of the icon is matched with coordinates (X_{b2},Y_{b2}) when the display screen 401 is landscape oriented. In addition, the second record indicates that the program "BBB" is started when the icon is selected.

The third record of the example indicates that an icon that is identified by an icon ID "IC-C" is displayed so that the upper left corner of the icon is matched with coordinates (X_{c1},Y_{c1}) when the display screen 401 is portrait oriented. In addition, the third record indicates that the icon is displayed so that the upper left corner of the icon is matched with coordinates (X_{c2},Y_{c2}) when the display screen 401 is landscape oriented. In addition, the third record indicates that the program "CCC" is started when the icon is selected.

The fourth record of the example indicates that an icon that is identified by an icon ID "IC-D" is displayed so that the upper left corner of the icon is matched with coordinates (X_{d1},Y_{d1}) when the display screen 401 is portrait oriented. In addition, the fourth record that indicates that the icon is displayed so that the upper left corner of the icon is matched with coordinates (X_{d2},Y_{d2}) when the display screen 401 is landscape oriented. In addition, the fourth record indicates that the program "DDD" is started up when the icon is selected.

Returning to the description of FIG. 9, the display processing unit 907 displays a display object (in the example, an icon), based on the determination result of the hand that holds the mobile device. The detection unit 909 detects selection of the display object (in the example, the icon). The execution unit 911 executes processing that is related to the selected display object (in the example, the icon). The module configuration of the mobile terminal device 101 is as described above.

An operation of the mobile terminal device 101 is described below. In a processing flow described below, processing for a display object (in the example, an icon) is described.

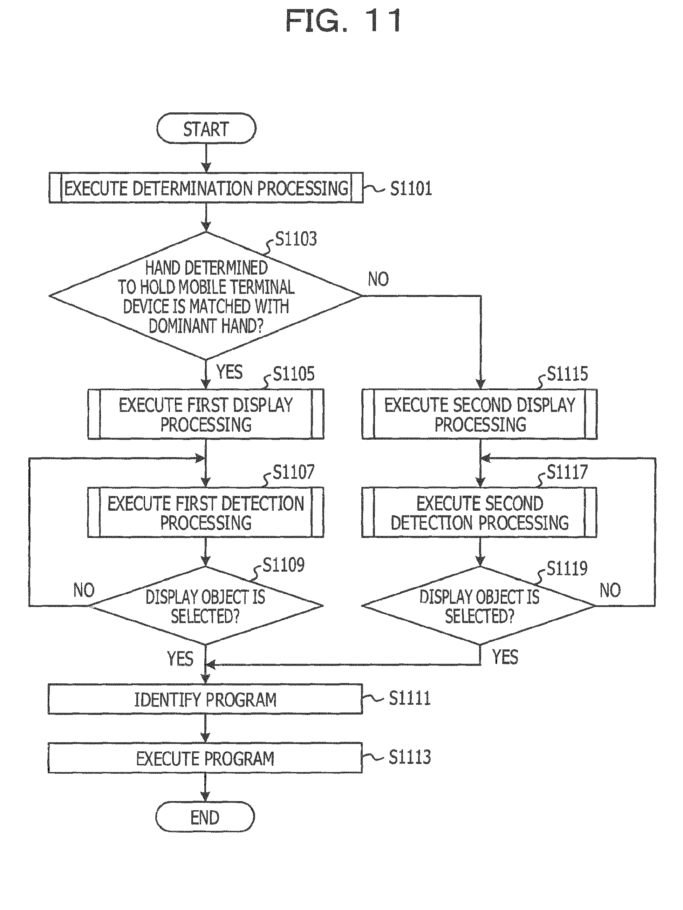

FIG. 11 illustrates a flow of main processing. The determination unit 903 executes determination processing (S1101).

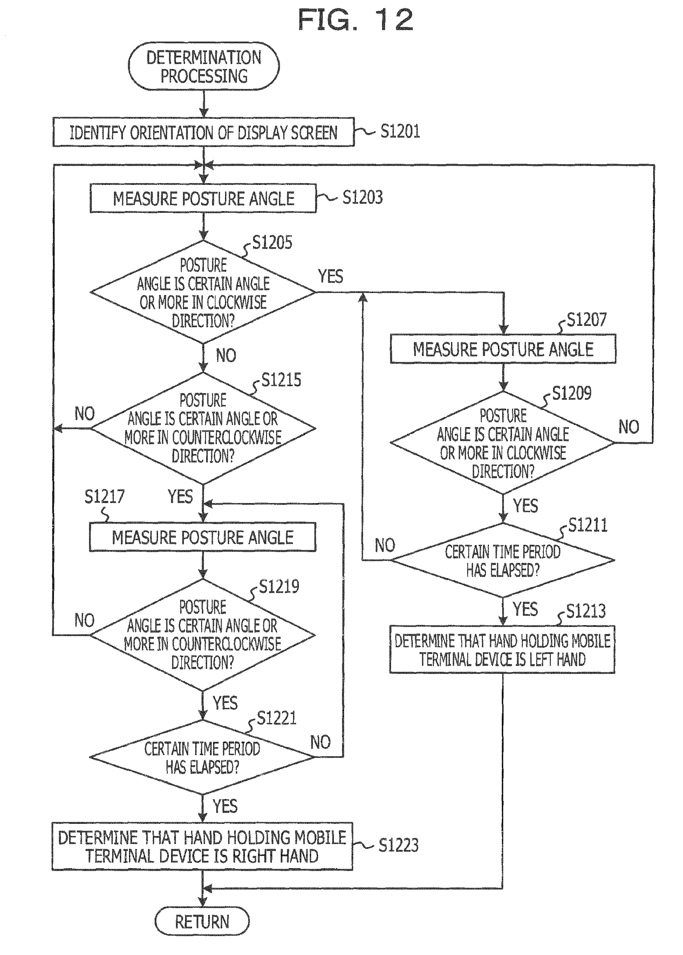

FIG. 12 illustrates a flow of the determination processing. In the determination processing, whether the hand that holds the mobile device is the left hand or right hand is determined based on the orientation of the display screen 401 when a certain posture of the mobile device is maintained for a certain time period. When the certain posture is not maintained for the certain time period, the posture is not stable, so that the determination processing is continued.

The determination unit 903 identifies the orientation of the display screen 401 (S1201). The determination unit 903 obtains information that is used to identify the orientation of the display screen 401, for example, from the display processing unit 907. Alternatively, the orientation of the display screen 401 may be identified based on the posture angle.

The determination unit 903 measures the posture angle (S1203). The determination unit 903 measures the roll angle p when the display screen 401 is portrait oriented. The determination unit 903 measures the pitch angle α when the display screen 401 is landscape oriented. For example, the determination unit 903 measures the roll angle β or the pitch angle α using the geomagnetic sensor 833 or the gyro sensor 835.

The determination unit 903 determines whether or not the posture angle is a certain angle (for example, 5 degrees) or more in the clockwise direction (S1205). In the case in which the display screen 401 is portrait oriented, when the roll angle β is the certain angle or more in the clockwise direction, the state corresponds to the state in which the mobile device is held by the left hand as illustrated in FIG. 2. The determination unit 903 may set an upper limit (for example, 15 degrees) for the posture angle.

In addition, even when the display screen 401 is landscape oriented, the display screen 401 is generally tilted inward. Thus, also in the case in which the display screen 401 is landscape oriented, when the pitch angle α is the certain angle or more in the clockwise direction, the state corresponds to the state in which the mobile device is held by the left hand.

That is, regardless of the orientation of the display screen 401, it is assumed that the mobile device is held by the left hand when the measured posture angle is the certain angle or more in the clockwise direction.

When the determination unit 903 determines that the posture angle is the certain angle or more in the clockwise direction, the determination unit 903 measures the posture angle similar to the processing of S1203 (S1207). In addition, the determination unit 903 determines whether or not the posture angle is the certain angle or more in the clockwise direction similar to the processing of S1205 (S1209).

When the determination unit 903 determines that the posture angle is less than the certain angle in the clockwise direction, the flow returns to the processing of S1203. When the determination unit 903 determines that the posture angle is the certain angle or more in the clockwise direction, the determination unit 903 determines whether or not the certain time period has elapsed in the loop of S1207 to S1211 (S1211).

When the determination unit 903 determines that the above-described certain time period does not elapse, the flow returns to the processing of S1207, and the determination unit 903 repeats the above-described pieces of processing.

When the determination unit 903 determines that the above-described certain time period has elapsed, the determination unit 903 determines that the hand that holds the mobile device is the left hand (S1213), and the determination processing ends.

On the other hand, when the determination unit 903 determines that the posture angle is less than the certain angle in the clockwise direction in S1205, the determination unit 903 determines whether or not the posture angle is a certain angle (for example, 5 degrees) or more in the counterclockwise direction (S1215). In the case in which the display screen 401 is portrait oriented, when the roll angle β is the certain angle or more in the counterclockwise direction, the state corresponds to the state in which the mobile device is held by the right hand as illustrated in FIG. 1.

In addition, even when the display screen 401 is landscape oriented, the display screen 401 is generally tilted inward. Thus, even in the case in which the display screen 401 is landscape oriented, when the pitch angle α is the certain angle or more in the counterclockwise direction, the state corresponds to the state in which the mobile device is held by the right hand.

That is, regardless of the orientation of the display screen 401, it is assumed that the mobile device is held by the right hand when the measured posture angle is the certain angle or more in the counterclockwise direction. The determination unit 903 may set an upper limit (for example, 15 degrees) for the posture angle.

When the determination unit 903 determines that the posture angle is less the certain angle in the counterclockwise direction, the flow returns to the processing of S1203.

On the other hand, when the determination unit 903 determines that posture angle is the certain angle or more in the counterclockwise direction, the determination unit 903 measures the posture angle similar to the processing of S1203 (S1217). After that, the determination unit 903 determines whether or not the posture angle is the certain angle or more in the counterclockwise direction similar to the processing of S1215 (S1219).

When the determination unit 903 determines that the posture angle is less the certain angle in the counterclockwise direction, the flow returns to the processing of S1203.

When the determination unit 903 determines that the posture angle is the certain angle or more in the clockwise direction, the determination unit 903 determines whether or not a certain time period has elapsed in the loop of S1217 to S1221 (S1221).

When the determination unit 903 determines that the above-described certain time period does not elapse, the flow returns to the processing of S1217, and the determination unit 903 repeats the above-described pieces of processing.

When the determination unit 903 determines that the above-described certain time period has elapsed, the determination unit 903 determines that the hand that holds the mobile device is the right hand (S1223), and the determination processing ends. When the determination processing ends, the flow proceeds to the processing of S1103 illustrated in FIG. 11.

In the above-described example, whether the hand that holds the mobile terminal device 101 is the right hand or left hand is determined based on the posture angle of the mobile terminal device 101, but the hand that holds the mobile device may be determined by a further method.

For example, the hand that holds the mobile device may be determined by acceleration that has been measured using the acceleration sensor 837. In the state illustrated in FIG. 1, acceleration in the minus direction of the Y-axis (FIG. 3) is generated under the influence of gravity. On the other hand, in the state illustrated in FIG. 2, acceleration in the plus direction of the Y-axis (FIG. 3) is generated under the influence of gravity. Thus, instead of the roll angle β, based on acceleration that is related to the Y-axis (FIG. 3), the state of the mobile terminal device 101 may be determined.

In addition, when the display screen 401 is landscape oriented, and the mobile terminal device 101 is held by the right hand, acceleration in the plus direction of the X-axis (FIG. 3) is generated under the influence of gravity. Similarly, when the display screen 401 is landscape oriented, and the mobile terminal device 101 is held by the left hand, acceleration in the minus direction of the X-axis (FIG. 3) is generated under the influence of gravity. Thus, instead of the pitch angle α, based on acceleration that is related to the X-axis (FIG. 3), the state of the mobile terminal device 101 may be determined.

In addition, the hand that holds the mobile device may be determined by a user operation. For example, it may be determined that the mobile device is held by the right hand when the user touches anywhere on the right side of the display screen 401, and it may be determined that the mobile device is held by the left hand when the user touches anywhere on the left side of the display screen 401.

Returning to the description of FIG. 11, the display processing unit 907 determines whether or not the hand that is determined to hold the mobile terminal device 101 is the dominant hand (S1103). At that time, the display processing unit 907 identifies the dominant hand in accordance with data that is stored in the dominant hand storage unit 901.

When the display processing unit 907 determines that the hand that is determined to hold the mobile terminal device 101 is the dominant hand, the display processing unit 907 executes first display processing (S1105).

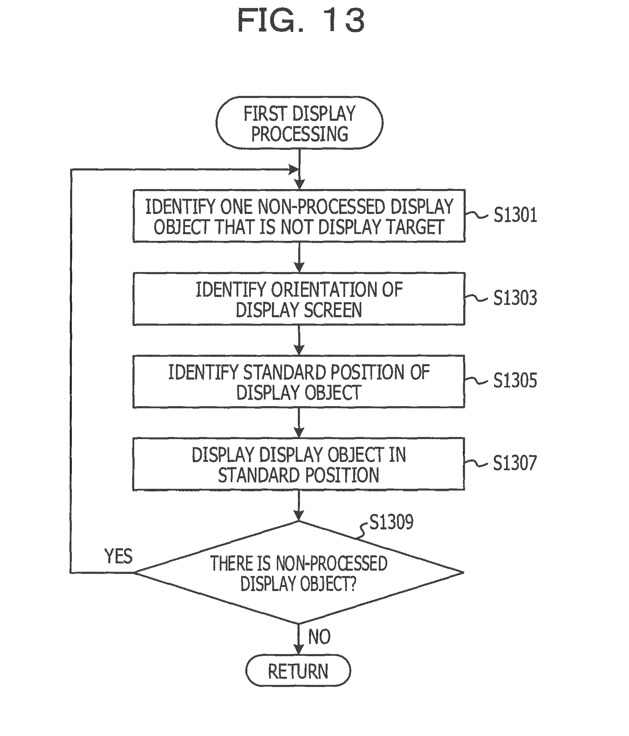

FIG. 13 illustrates a flow of the first display processing. The display processing unit 907 identifies one non-processed display object that is not a display target from among non-processed display objects (in the example, icons) that are set to data that is stored in the display object data storage unit 905 (S1301). For example, the display processing unit 907 sequentially identifies one record that is included in the icon table.

The display processing unit 907 identifies the orientation of the display screen 401 (S1303), and identifies the standard position of the display object (in the example, the icon) in accordance with the identified orientation of the display screen 401 (S1305). For example, when the display screen 401 is portrait oriented, the display processing unit 907 identifies coordinates that are stored in a field of the portrait standard position that is included in the record of the icon table. When the display screen 401 is landscape oriented, the display processing unit 907 identifies coordinates that are stored in a field of the landscape standard position that is included in the record of the icon table.

The display processing unit 907 displays the display object (in the example, the icon) in the standard position in accordance with the orientation of the display screen 401 (S1307). For example, the display processing unit 907 displays the icon so that the upper left corner of the icon is matched with the standard position.

The display processing unit 907 determines whether or not there is a non-processed display object (in the example, the icon) (S1309). For example, the display processing unit 907 determines that there is no non-processed icon when even the final record that is included in the icon table is processed.

When the display processing unit 907 determines that there is a non-processed display object (in the example, an icon), the flow returns to the processing of S1301, and the display processing unit 907 repeats the above-described pieces of processing.

When the display processing unit 907 determines that there is no non-processed display object (in the example, the icon), in the display processing unit 907, the first display processing ends. When the first display processing ends, the flow proceeds to the processing of S1107 illustrated in FIG. 11.

Returning to the description of FIG. 11, the detection unit 909 executes first detection processing (S1107).

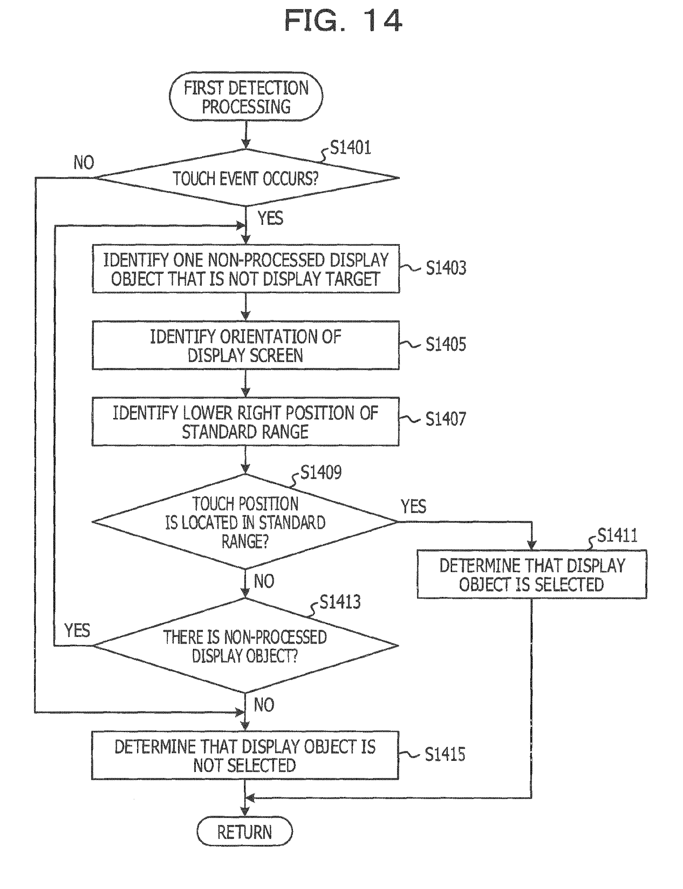

FIG. 14 illustrates a flow of the first detection processing. The detection unit 909 determines whether or not a touch event occurs (S1401). When the detection unit 909 determines that a touch event does not occur, the detection unit 909 determines that a display object (in the example, an icon) is not selected (S1415).

On the other hand, when the detection unit 909 determines that a touch event occurs, the detection unit 909 identifies one non-processed display object (in the example, an icon) that is not a determination target (S1403). For example, the detection unit 909 sequentially identifies a record that is included in the icon table.

The detection unit 909 identifies the orientation of the display screen 401 (S1405), and identifies the lower right position of a standard range based on the size of the icon (S1407). At that time, the detection unit 909 may obtain data that indicates the orientation of the display screen 401, for example, from the display processing unit 907. The standard range corresponds to an area to detect a touch operation, which is used to select a display object (in the example, an icon) in the case in which the mobile device is held by the dominant hand.

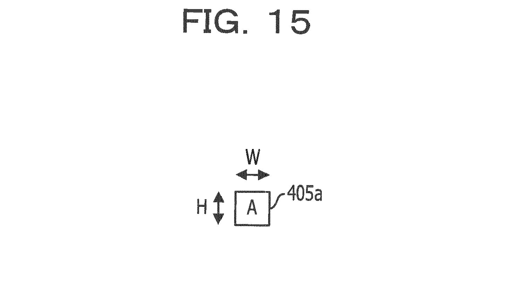

FIG. 15 illustrates the size of an icon. In FIG. 15, the width of the icon is represented as "W", and the height of the icon is represented as "H". In the example, the standard range corresponds to the boundary of the icon. The boundary of the icon is a rectangle shape, so that the standard range is identified by two points of the upper left corner and the lower right corner of the icon. The upper left corner is matched with the standard position. The x coordinate of the lower right corner is obtained by adding the width W of the icon to the x coordinate of the upper left corner. The y coordinate of the lower right corner is obtained by adding the height H to the y coordinate of the upper left corner. Thus, when the coordinates of the standard position are represented as (X,Y), the coordinates of the lower right corner are represented by (X+W,Y+H).

The detection unit 909 determines whether or not the touch position is located in the standard range (S1409). For example, the detection unit 909 determines that the touch position is located in the standard range when the x coordinate of the touch position is "X" or more and "X+W" or less, and the y coordinate of the touch position is "Y" or more and "Y+H" or less.

When the detection unit 909 determines that the touch position is located in the standard range, the detection unit 909 determines that a display object (in the example, an icon) is selected (S1411). In addition, in the detection unit 909, the first detection processing ends.

When the detection unit 909 determines that the touch position is not located in the standard range, the detection unit 909 determines whether or not there is a non-processed display object (in the example, an icon) (S1413). For example, the display processing unit 907 determines that there is no non-processed icon when even the final record that is included in the icon table is processed.

When the display processing unit 907 determines that there is a non-processed display object (in the example, an icon), the flow returns to the processing of S1403, and the detection unit 909 repeats the above-described pieces of processing.

When the display processing unit 907 that there is no non-processed display object (in the example, an icon), the detection unit 909 determines that a display object (in the example, an icon) is not selected (S1415). When the first detection processing ends, the flow proceeds to the processing of S1109 illustrated in FIG. 11.

Returning to the description of FIG. 11, the detection unit 909 determines whether or not a display object (in the example, an icon) is selected by the above-described first detection processing (S1109). When the detection unit 909 determines that a display object (in the example, an icon) is not selected by the above-described first detection processing, the flow returns to the processing of S1107, and the detection unit 909 repeats the first detection processing.

When the detection unit 909 determines that a display object (in the example, an icon) is selected by the above-described first detection processing, the execution unit 911 identifies a program that corresponds to the display object (in the example, the icon) (S1111). In the embodiment, the execution unit 911 identifies a program name that is set to the field of the record of the icon table. The execution unit 911 executes the identified program (S1113).

On the other hand, when the display processing unit 907 determines that the hand that is determined to hold the mobile terminal device 101 in S1103 is not the dominant hand, the display processing unit 907 executes second display processing (S1115).

In the second display processing, using the center axis as a symmetry axis, the display object (in the example, the icon) is displayed at the symmetrical position for the standard position (hereinafter referred to as symmetrical position). Before the second display processing is described, the symmetrical position is described below. In addition, using the center line 403 as a symmetry axis, a range that is symmetrical for the standard range is referred to as a symmetrical range.

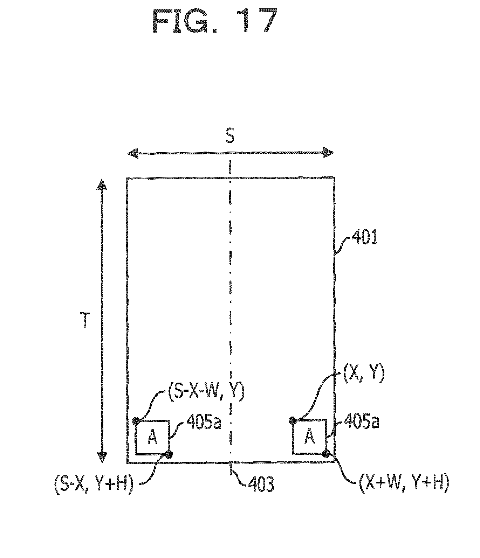

FIG. 17 illustrates an example of the symmetrical position for an icon in the portrait oriented screen. The width of the portrait oriented screen is the length S of the short side, and the height of the portrait oriented screen is the length T of the long side.

The icon 405a on the right side is arranged using the standard position as a reference. When the coordinates of the upper left corner of the standard range are represented as (X,Y), the coordinates of the lower right corner of the standard range are represented by (X+W,Y+H) as described above. The upper left corner of the standard range is the standard position.

The icon 405a on the left side is arranged using the symmetrical position as a reference. The coordinates of the upper left corner of the symmetrical range are represented by (S-X-W,Y), and the coordinates of the lower right corner of the symmetrical range are represented by (S-X,Y+H) as described above.

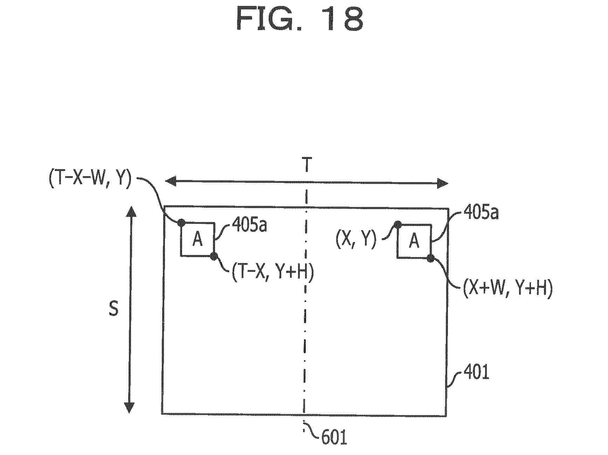

FIG. 18 illustrates an example of the symmetrical position for an icon in the landscape oriented screen. The width of the landscape oriented screen is the length T of the long side, and the height of the landscape oriented screen is the length S of the short side.

The icon 405a on the right side is arranged using the standard position as a reference. When the coordinates of the upper left corner of the standard range is represented as (X,Y), the coordinates of the lower right corner of the standard range is represented by (X+W,Y+H) as described above. The upper left corner of the standard range is the standard position.

The icon 405a on the left side is arranged using the symmetrical position as a reference. When the coordinates of the upper left corner of the symmetrical range is represented by (T-X-W,Y), and the coordinates of the lower right corner of the symmetrical range is represented by (T-X,Y+H) as described above.

As described above, regardless whether the display screen 401 is portrait oriented or landscape oriented, the symmetrical position and the symmetrical range are obtained based on the standard position.

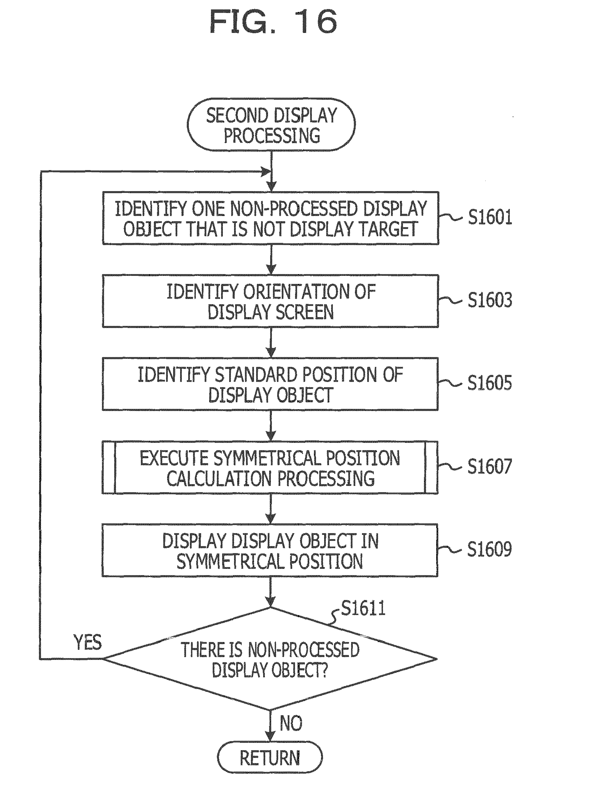

FIG. 16 illustrates a flow of second display processing. The display processing unit 907 identifies one non-processed display object (in the example, an icon) that is not a display target, similar to the processing of S1301 (S1601).

The display processing unit 907 identifies the orientation of the display screen 401, similar to the processing of S1303 (S1603), and identifies the standard position of the display object (in the example, the icon), similar to the processing of S1305 (S1605). In addition, the display processing unit 907 executes symmetrical position calculation processing (S1607).

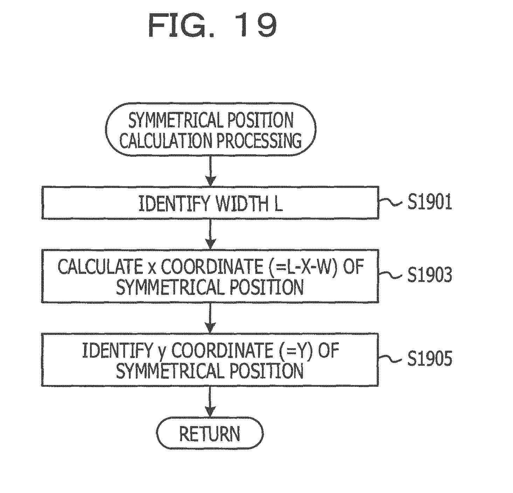

FIG. 19 illustrates a flow of the symmetrical position calculation processing. The display processing unit 907 identifies the width L of the screen (S1901). When the display screen 401 is portrait oriented, the length S of the short side is substituted into a parameter of the width L. When the display screen 401 is landscape oriented, the length T of the long side is substituted into the parameter of the width L.

The display processing unit 907 calculates the x coordinate of the symmetrical position (S1903). The coordinate X of standard position is subtracted from the width L, and the width W of the icon is further subtracted from the width L, so that the x coordinate of the symmetrical position is obtained.

The display processing unit 907 identifies the y coordinate of the symmetrical position (S1905). The y coordinate of the symmetrical position is equal to the coordinate Y of the standard position. When the symmetrical position calculation processing ends, the flow proceeds to the processing of S1609 illustrated in FIG. 16.

Returning to the description of FIG. 16, the display processing unit 907 displays the display object (in the example, the icon) in the symmetrical position in accordance with the orientation of the display screen 401 (S1609). For example, the display processing unit 907 displays the icon so that the upper left corner of the icon is matched with the symmetrical position.

The display processing unit 907 determines whether or not there is a non-processed display object (in the example, an icon), similar to the processing of S1309 (S1611).

When the display processing unit 907 determines that there is a non-processed display object (in the example, an icon), the flow returns to the processing of S1601, and the display processing unit 907 repeats the above-described pieces of processing.

When the display processing unit 907 determines that there is no non-processed display object (in the example, an icon), in the display processing unit 907, the second display processing ends. When the second display processing ends, the flow proceeds to the processing of S1117 illustrated in FIG. 11.

Returning to the description of FIG. 11, the detection unit 909 executes second detection processing (S1117).

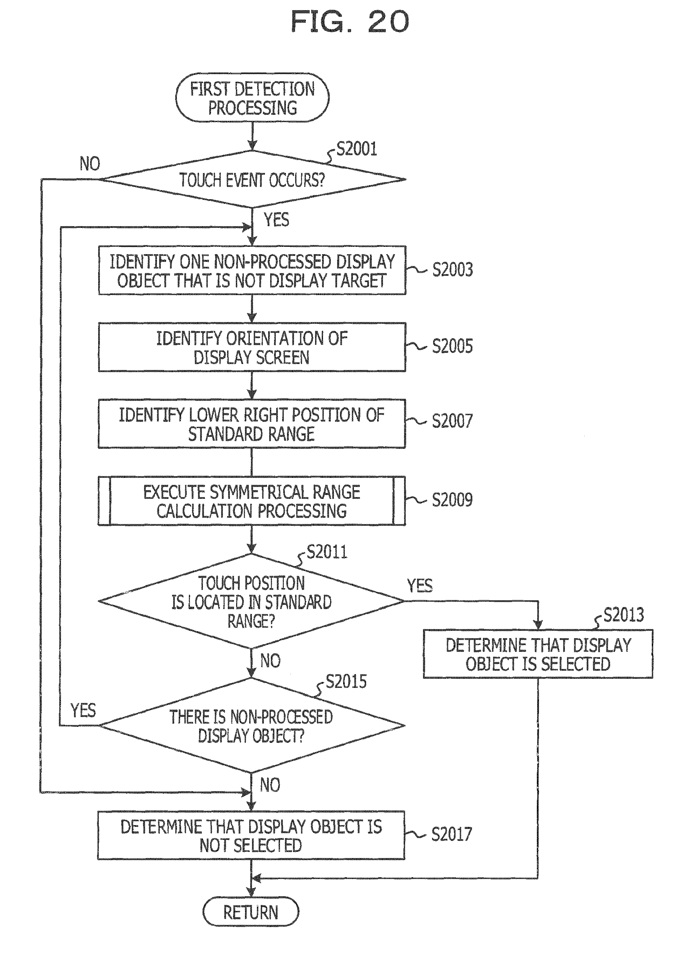

FIG. 20 illustrates a flow of the second detection processing. The detection unit 909 determines whether or not a touch event occurs, similar to the processing of S1401 (S2001). When the detection unit 909 determines that a touch event does not occur, the detection unit 909 determines that a display object (in the example, an icon) is not selected (S2017).

On the other hand, the detection unit 909 determines that a touch event occurs, the detection unit 909 identifies one non-processed display object (in the example, an icon) that is not a determination target, similar to the processing of S1403 (S2003).

The detection unit 909 identifies the orientation of the display screen 401, similar to the processing of S1405 (S2005), and identifies the lower right position of the target range based on the size of the icon, similar to the processing of S1407 (S2007). In addition, the detection unit 909 executes symmetrical range calculation processing (S2009).

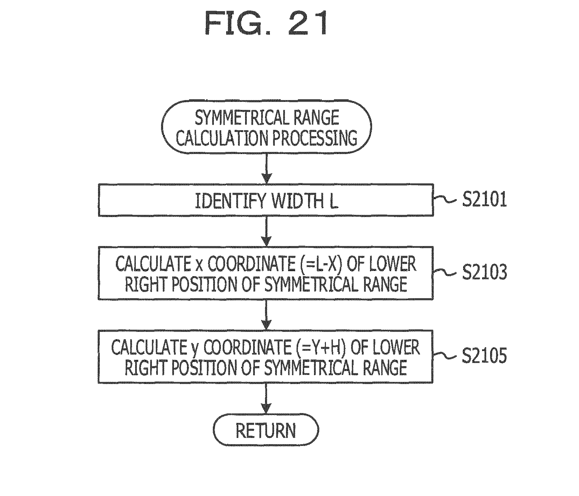

FIG. 21 illustrates a flow of the symmetrical range calculation processing. The detection unit 909 identifies the width L, similar to the processing of S1901 (S2101).

The detection unit 909 calculates the x coordinate of the lower right position of the symmetrical range (S2103). The x coordinate of the symmetrical position is obtained by subtracting the coordinate X of the standard position from the width L.

The detection unit 909 calculates the y coordinate of the lower right position of the symmetrical range (S2105). The y coordinate of the symmetrical position is obtained by adding the height H to the coordinate Y of the standard position. When the symmetrical range calculation processing ends, the flow proceeds to the processing of S2011 illustrated in FIG. 20.

Returning to the description of FIG. 20, the detection unit 909 determines whether or not the touch position is located in the symmetrical range (S2011). For example, the detection unit 909 determines that the touch position is located in the target range when the x coordinate of the touch position is "L-X-W" or more and "L-X" or less, and the y coordinate of the touch position is "Y" or more and "Y+H" or less.

When the detection unit 909 determines that the touch position is located in the target range, the detection unit 909 determines that a display object (in the example, an icon) is selected, similar to the processing of S1411 (S2013). In addition, in the detection unit 909, the second detection processing ends.

When the detection unit 909 determines that the touch position is not located in the target range, the detection unit 909 determines whether or not there is a non-processed display object (in the example, an icon), similar to the processing of S1413 (S2015). When the detection unit 909 determines that there is a non-processed display object (in the example, an icon), the flow returns to the processing of S2003, and the detection unit 909 repeats the above-described pieces of processing.

When the detection unit 909 determines that there is no non-processed display object (in the example, an icon), the detection unit 909 determines that a display object (in the example, an icon) is not selected, similar to the processing of S1415 (S2017). When the second detection processing ends, the flow proceeds to the processing of S1119 illustrated in FIG. 11.

Returning to the description of FIG. 11, the detection unit 909 determines whether or not a display object (in the example, an icon) is selected by the above-described second detection processing (S1119). When the detection unit 909 determines that a display object (in the example, an icon) is not selected by the above-described second detection processing, the flow returns to the processing of S1117, and the detection unit 909 repeats the second detection processing.

When the detection unit 909 determines that a display object (in the example, an icon) is selected by the above-described second detection processing, the execution unit 911 identifies a program that corresponds to the display object (in the example, the icon) as described above (S1111). The execution unit 911 executes the identified program (S1113). The operation of the mobile terminal device 101 is as described above.

The above-described icon is an example of a display object. The display object may be a further interface component. For example, the display object may be a widget such as a button, a list, a menu, a bar, a tab, a label, a box, or a window.

In the embodiment, regardless whether the user holds the mobile device with the left hand or right hand, a positional relationship between a display object (for example, an icon) and the hand becomes same. Thus, the usability is caused to become similar between the case in which the mobile device is held by the right hand and the case in which the mobile device is held by the left hand. For example, a display object at a position that is seldom covered by the thumb of the right hand when the user holds the mobile device with the right hand is displayed at a position that is seldom covered by the thumb of the left hand when the user holds the mobile device with the left hand.

In addition, regardless whether the user holds the mobile device with the left hand or right hand, an operation by a similar finger movement may be performed for the same display object (for example, an icon). For example, a display object that is located at a position that is easily touched by the thumb of the right hand when the user holds the mobile device using a touch panel with the right hand is easily touched by the thumb of the left hand even when the user holds the mobile device with the left hand.

In addition, the user may perform an operation that causes the same program to be started up with a similar finger movement using either hand.

In addition, the center line is used as a symmetry axis, so that the symmetrical position and the symmetrical range for a display object may be included within the display screen.

### [Second embodiment]

In the embodiment, an example is described in which arrangement of a numeric keypad is changed depending whether the hand that holds the mobile terminal device 101 is the left hand or right hand.

The numeric keypad is an example of a display object. The display object according to the embodiment includes a plurality of interface components that is in accordance with certain arrangement. For example, the numeric keypad includes a plurality of numeric key buttons that are in accordance with certain arrangement.

In the embodiment, it is assumed that a plurality of interface components (in the example, numeric key buttons) is displayed in accordance with certain arrangement when a display object (in the example, a numeric keypad) is displayed.

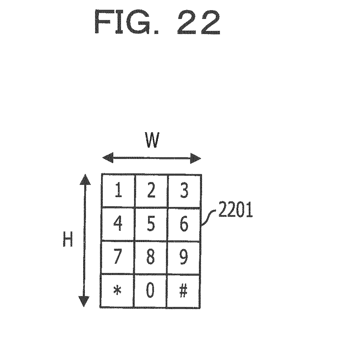

FIG. 22 illustrates an example of a numeric keypad. The numeric keypad includes 12 numeric key buttons that are arranged in four rows and three columns. In the first row, a numeric key button "1", a numeric key button "2", and a numeric key button "3" are arranged from left to right. In the second row, a numeric key button "4", a numeric key button "5", and a numeric key button "6" are arranged from left to right. In the third row, a numeric key button "7", a numeric key button "8", and a numeric key button "9" are arranged from left to right. In the fourth row, a numeric key button "*", a numeric key button "0", and a numeric key button "#" are arranged from left to right.

In the embodiment, as illustrated in FIG. 22, the width of a numeric keypad 2201 is represented by "W", and the height of the numeric keypad 2201 is represented by "H".

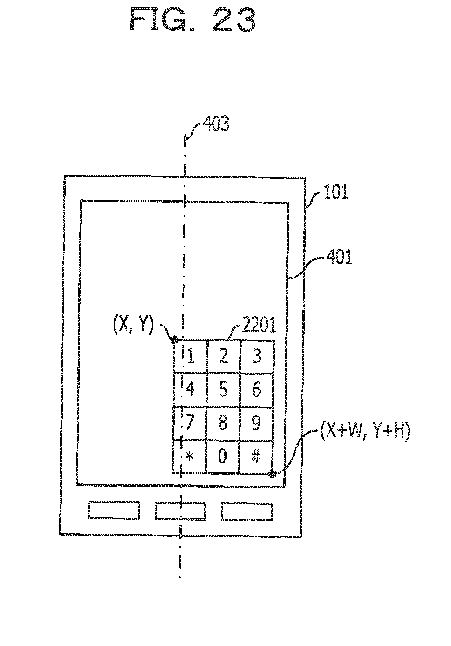

FIG. 23 illustrates an arrangement example of the numeric keypad, which is suitable when the right-handed user uses the numeric keypad with the right hand. In the example, the numeric keypad 2201 is arranged on the right side of the display screen 401. Therefore, numeric key buttons are easily touched by the thumb of the right hand that is the dominant hand. However, when the mobile device is held by the left hand that is opposite to the dominant hand, any numeric key button is seldom touched by the thumb of the left hand.

Also in the second embodiment, similar to the first embodiment, when the mobile terminal device 101 is held by the hand that is opposite to the dominant hand, the position at which the numeric keypad is arranged is changed.

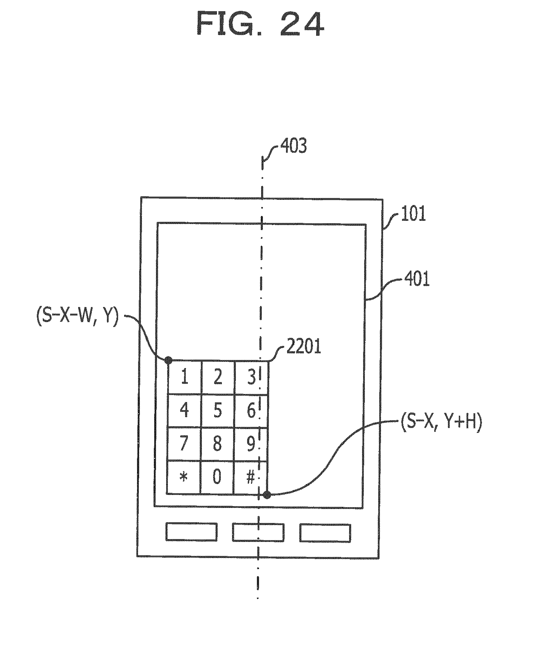

FIG. 24 illustrates an arrangement example of the numeric keypad, which is suitable when the right-handed user uses the numeric keypad with the left hand. As illustrated in FIG. 24, the position of the numeric keypad 2201 is changed to the symmetrical position using the center line 403 as a symmetry axis. When the position of the numeric keypad is changed as described above, the numeric key buttons are easily touched by the thumb of the left hand.

As illustrated in FIG. 23, when the standard position of the numeric keypad 2201, that is, the coordinates of the upper left corner are represented as (X,Y), the coordinates of the lower right corner are represented by (X+W,Y+H).

In addition, as illustrated in FIG. 24, the symmetrical position of the numeric keypad 2201, that is, the coordinates of the upper left corner are represented by (S-X-W,Y), and the coordinates of the lower right corner are represented by (S-X,Y+H).

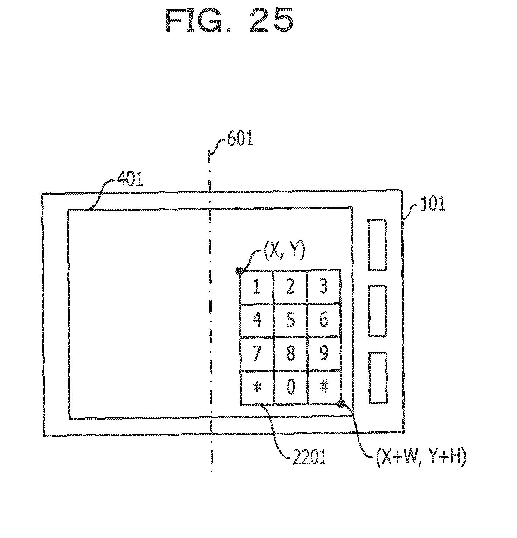

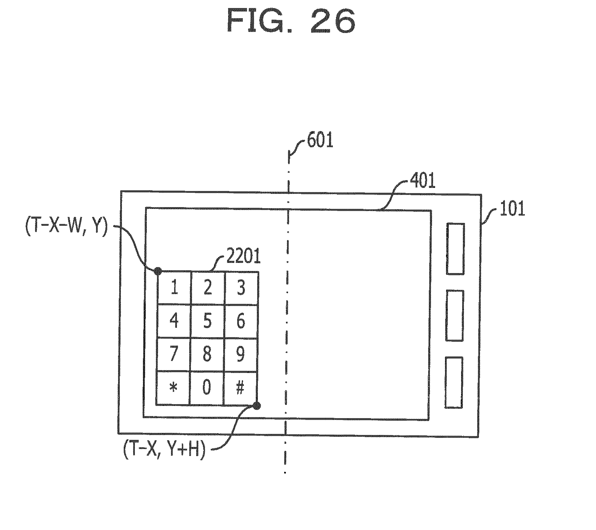

In the above-described examples, the case is described in which the display screen 401 is portrait oriented, but such examples are also applied to the case in which the display screen 401 is landscape oriented. The case in which the display screen 401 is landscape oriented is described using FIGs. 25 and 26.

FIG. 25 illustrates an arrangement example of the numeric keypad, which is suitable when the right-handed user uses the numeric keypad with the right hand. In the example, the numeric keypad 2201 is arranged on the right side of the display screen 401. Therefore, the numeric key buttons are easily touched with the thumb of the right hand that is the dominant hand. However, when the mobile device is held by the left hand that is opposite to the dominant hand, any numeric key button is seldom touched by the thumb of the left hand.

Also in the second embodiment, similar to the first embodiment, when the mobile terminal device 101 is held by the hand that is opposite to the dominant hand, the position at which the numeric keypad is arranged is changed.

FIG. 26 illustrates an arrangement example of the numeric keypad, which is suitable when the right-handed user uses the numeric keypad with the left hand. As illustrated in FIG. 26, the position of the numeric keypad 2201 is changed to the symmetrical position using the center line 601 as a symmetry axis. When the position of the numeric keypad is changed as described above, the numeric key buttons are easily touched by the thumb of the left hand.

As illustrated in FIG. 25, when the standard position of the numeric keypad 2201, that is, the coordinates of the upper left corner are represented as (X,Y), the coordinates of the lower right corner are represented by (X+W,Y+H).

In addition, as illustrated in FIG. 26, the symmetrical position of the numeric keypad 2201, that is, the coordinates of the upper left corner are represented by (T-X-W,Y), and the coordinates of the lower right corner are represented by (T-X,Y+H).

In the embodiment, in the display object data storage unit 905, a display object table that is described below is stored instead of the above-described icon table.

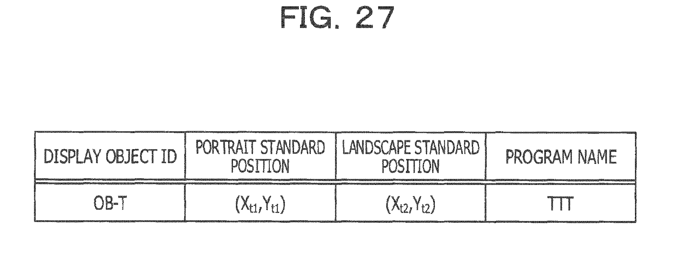

FIG. 27 illustrates an example of the display object table. A record is included for each display object. The record includes a field that is used to set a display object ID, a field that is used to set a portrait standard position, a field that is used to set a landscape standard position, and a field that is used to set a program name.

The display object ID is an identifier that is used to identify a display object (in the example, a numeric keypad). The portrait standard position is a data that is used identify the display position of the display object (in the example, the numeric keypad) in the display screen 401 when it is assumed that the display screen 401 is portrait oriented, and the mobile terminal device 101 is held by the dominant hand. In the example, the data indicates the coordinates of the upper left corner of the display object (in the example, the numeric keypad) when the X-axis is provided in the right direction, and the Y-axis is provided in the downward direction by setting the upper left corner of the portrait oriented display screen 401 as an origin point. The landscape standard position is data that is used to identify the display position of the display object (in the example, the numeric keypad) in the display screen 401 when it is assumed that the display screen 401 is landscape oriented, and the mobile terminal device 101 is held by the dominant hand. In the example, the data indicates the coordinates of the upper left corner of the display object (in the example, the numeric keypad) when the X-axis is provided in the right direction, and the Y-axis is provided in the downward direction by setting the upper left corner of the landscape oriented display screen 401 as an origin point. The program name is a name of a program that is a destination to which an even that occurs in the display object (in the example, the numeric keypad) is notified.

The record of the example indicates that a display object that is identified by a display object ID "OB-T" is displayed so that the upper left corner of the display object is matched with the coordinates (Xₜ₁,Yₜ₁) when the display screen 401 is portrait oriented. In addition, the record indicates that the display object is displayed so that the upper left corner of the display object is matched with the coordinates (Xₜ₂,Yₜ₂) when the display screen 401 is landscape oriented. In addition, the record indicates that an event that occurs in the display object is notified to a program "TTT".

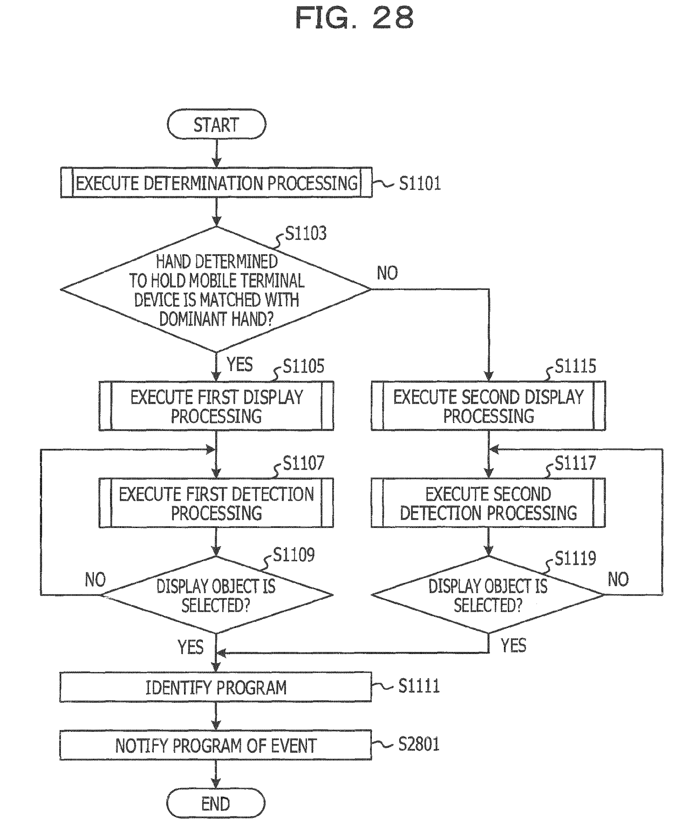

FIG. 28 illustrates a flow of main processing in the second embodiment. The processing of S1101 to S1111 is similar to that of the first embodiment. However, instead of the processing of identifying the portrait standard position, the landscape standard position, and the program name, based on the icon table illustrated in FIG. 10 in the first embodiment, in the second embodiment, a portrait standard position, a landscape standard position, and a program name are identified based on the display object table illustrated in FIG. 27.

In addition, in S1307 of FIG. 13 and S1609 of FIG. 16, when a display object is displayed, interface components (in the example, numeric key buttons) are displayed in accordance with certain arrangement (for example, the arrangement illustrated in FIG. 22).

In addition, in S2801, the execution unit 911 notifies the program that has been identified in S1111 of an event that has occurred in the display object (in the example, the numeric keypad). For example, the execution unit 911 may notify the program of an ID of an interface component (in the example, an ID of the numeric key button) that is included in the display object. Alternatively, the execution unit 911 may notify the program of a code (in the example, a numeric code) that corresponds to the ID of the interface component (in the example, the ID of the numeric key button) that is included in the display object. Alternatively, the execution unit 911 may notify the program of a relative touch position in the display object (in the example, the numeric keypad).

The example of the numeric keypad is as described above, but the display object may be a character key array that includes a plurality of character key buttons. In this case, the character key button is an example of an interface component. In addition, an ID of the character key button corresponds to an ID of the interface component, and the character code corresponds to a code that corresponds to the ID of the interface component.

In the embodiment, regardless whether the user holds the mobile device with the left hand or right hand, a positional relationship between interface components that are included in the display object may be caused not to be changed. For example, in the case of the display object such as the numeric keypad, confusion of the user may not be caused as long as the numeric key buttons are not replaced with each other.

The description of the embodiments is made above, but the embodiments are not limited to such a description. For example, the above-described function block configuration may not be matched with an actual program module configuration.

In addition, the above-described configuration of each of the storage areas is just an example, and the embodiment is not limited to the above-described configuration. In addition, also in the processing flows, the order of the pieces of processing may be changed as long as the processing result is not changed. In addition, the pieces of processing may be executed in parallel.

The conclusion of the above-described embodiments is as follows.

A mobile device according to an embodiment includes a determination unit that determines whether or not the mobile device is held by the right hand or the left hand, and a display processing unit that displays a display object in the symmetrical position for a reference position in which the display object is to be displayed, using a vertical axis as a symmetry axis in a display screen when the determination unit determines that the mobile device is held by the opposite hand to a reference hand.

Therefore, regardless whether the user holds the mobile device with the left hand or the right hand, a positional relationship between the display object and the hand becomes same. Thus, the usability may be caused to become similar between the case in which the mobile device is held by the right hand and the case in which the mobile device is held by the left hand. For example, a display object in a position that is seldom covered by the thumb of the right hand when the user holds the mobile device with the right hand is displayed in a position that is seldom covered by the thumb of the left hand when the user holds the mobile device with the left hand.

In addition, the above-described mobile device may include a detection unit that detects an event for the display object in a symmetrical range for a reference range in which the event is to be detected in accordance with the above-described symmetry axis when the determination unit determines that the mobile device is held by the opposite hand to the reference hand.

Therefore, regardless whether the user holds the mobile device with the left hand or right hand, an operation by a similar finger movement may be performed on the same display object. For example, a display object at a position that is easily touched by the thumb of the right hand when the user holds the mobile device that includes the touch panel with the right hand is easily touched by the thumb of the left hand even when the user holds the mobile device with the left hand.

In addition, the above-described mobile device includes an execution unit that executes a program that is related to the display object when the above-described mobile device detects the above-described event.

Therefore, the user may perform an operation that causes the same program to be started up by a similar finger movement using either hand.

In addition, the display object may include a plurality of interface components that is in accordance with certain arrangement. In addition, when the display object is displayed, the above-described display processing unit may display the plurality of interface components in accordance with the above-described certain arrangement.

Therefore, regardless whether the user holds the mobile device with the left hand or right hand, a positional relationship between the interface components that are included in the display object may be caused not to be changed. For example, in the case of the display object such as the numeric keypad, confusion of the user may not be caused as long as the numeric key buttons are not replaced with each other.

In addition, when the display screen is portrait oriented, the above-described vertical axis may be in parallel with the long side of the display screen, and may be an axis that has the same distance from the left end and the right end of the portrait oriented display screen. In addition, when the display screen is landscape oriented, the above-described vertical axis may be in parallel with the short side of the display screen, and may be an axis that has the same distance from the left end and the right end of the landscape oriented display screen.

Therefore, both of the symmetrical position and the symmetrical range of the display object may be included within the display screen.

A program that is used to cause a processor to execute processing in the above-described mobile device may be created, and the program may be stored, for example, in a computer-readable storage medium such as a flexible disk, a CD-ROM, a magneto optical disk, a semiconductor memory, or a hard disk, or a storage device. The intermediate processing result is generally stored in the storage device such as a main memory temporarily.

### REFERENCE SIGNS LIST

- 101: mobile terminal device
- 401: display screen
- 403: center line
- 405: icon
- 601: center line
- 801: bus
- 803: RAM
- 805: speaker
- 807: LCD
- 809: touch pad
- 811: microphone
- 813: NAND memory
- 815: communication CPU
- 817: application CPU
- 819: short-range communication device
- 821: GPS device
- 823: wireless LAN device
- 825: DSP
- 827: ISP
- 829: camera
- 831: sub-processor
- 833: geomagnetic sensor
- 835: gyro sensor
- 837: acceleration sensor
- 901: dominant hand storage unit
- 903: determination unit
- 905: display object data storage unit
- 907: display processing unit
- 909: detection unit
- 911: execution unit
- 2201: numeric keypad

## Claims

1. A mobile terminal comprising:
a storage unit configured to store display information for displaying a plurality of display objects in standard positions for a dominant hand;
a displaying unit configured to display the plurality of display objects based on the display information; and
a display processing unit configured to determine whether the dominant hand is holding the mobile terminal using a sensor, control the display to display the plurality of display objects in the standard positions when the dominant hand is determined as holding the mobile terminal, and control the display to display the plurality of display objects in symmetrical positions determined using a change in the standard positions when the dominant hand is determined as not holding the mobile terminal.

2. The mobile terminal according to claim 1, wherein the display processing unit is configured to determine the symmetrical positions based on the standard positions, a length of the displaying unit and a width of a display object.

3. The mobile terminal according to claim 1 or 2, wherein the symmetrical positions are symmetrical to the standard positions relative to a central axis of the displaying unit.

4. The mobile terminal according to claim 3, wherein the central axis is set based on an orientation of the displaying unit.

5. The mobile terminal according to claim 4, wherein the display processing unit is configured to determine the symmetrical positions based on the standard positions, the orientation of the displaying unit, a length of the displaying unit and a width of a display object.

6. The mobile terminal according to claim 2 or 5, wherein the length of the displaying unit used for determining the symmetrical positions is a length of a short side of the displaying unit when the orientation of the displaying unit is portrait.

7. The mobile terminal according to claim 2 or 5, wherein the length of the displaying unit used for determining the symmetrical positions is a length of a long side of the displaying unit when the orientation of the displaying unit is landscape.

8. The mobile terminal according to any of the preceding claims, wherein each of the standard positions includes a coordinate defining a position in the displaying unit, and wherein the display processing unit is configured to determine each of the symmetrical positions by subtracting, from the coordinate of each of the standard positions, a length of the displaying unit and a width of a display object.

9. The mobile terminal according to claim 8, wherein the length of the displaying unit used for determining the symmetrical positions is a length of a short side of the displaying unit when an orientation of the displaying unit is portrait.

10. The mobile terminal according to claim 5 or 8, wherein the length of the displaying unit used for determining the symmetrical positions is a length of a long side of the displaying unit when an orientation of the displaying unit is landscape.

11. The mobile terminal according to any of the preceding claims, wherein the display processing unit is configured to determine whether the dominant hand is holding the mobile terminal using a posture angle provided by the sensor.

12. The mobile terminal according to any of the preceding claims, wherein the display processing unit is configured to determine whether the dominant hand is holding the mobile terminal using a roll angle provided by the sensor.

13. The mobile terminal according to any of the preceding claims, wherein the standard positions are located within a movement range for a thumb of the dominant hand, and the symmetric positions are located within a movement range for a thumb of a non-dominant hand.

14. A display control method executed by a computer, the display control method comprising:
sensing a hand which is holding the computer using a sensor;
determining whether the hand is a certain hand determined in advance from among a right hand and a left hand;
controlling, based on information for displaying a plurality of display objects in standard positions for the certain hand, a display to display the plurality of display objects in the standard positions when it is determined that the hand is the certain hand; and
controlling, by the computer, the display to display the plurality of display objects in symmetrical positions determined using a change in the standard positions when it is not determined that the hand is the certain hand.

15. A display control program which, when executed by a computer, causes the computer to carry out the display control method according to claim 14.
